# EUROPÄISCHE PATENTSCHRIFT

(11) **EP 1 837 548 B1**
(45) Veröffentlichungstag und Bekanntmachung des Hinweises auf die Patenterteilung: **10.12.2008**
(21) Anmeldenummer: 07101713.1
(22) Anmeldetag: 05.02.2007
(51) Int. Cl.: F16F 9/05

(54) **Luftfeder- und Dämpfereinheit mit druckentlasteter Rollfalte**
Pneumatic spring and damping unit with decompression bellows
Unité d'amortissement et de ressort à air dotée d'un pli roulé détendu

(30) Priorität: 23.03.2006 DE 102006013832
(43) Veröffentlichungstag der Anmeldung: 26.09.2007
(73) Patentinhaber: Continental Aktiengesellschaft, 30165 Hannover (DE)
(72) Erfinder: Behmenburg, Christof, 31867, Lauenau (DE)

(56) Entgegenhaltungen:
- DE-A1- 3 436 664
- DE-B- 1 132 013
- DE-B3- 10 311 263
- FR-A1- 2 728 948

## Beschreibung

Die Erfindung betrifft eine Luftfeder- und Dämpfereinheit, insbesondere für Fahrwerke von Fahrzeugen, welche mindestens zwei mit Druckluft gefüllte Arbeitsräume aufweist, die jeweils mindestens teilweise durch bewegliche Wände in Form von Rollbälgen begrenzt werden, bei welcher die Rollbälge unter Bildung einer Rollfalte mindestens teilweise auf den Konturen rotationssymmetrischer Körper abrollen und bei welcher die Arbeitsräume untereinander über durchströmbare Drosselventile verbunden sind.

Luftfeder- und Dämpfereinheiten dienen heute insbesondere in Personenkraftwagen als besonders komfortable Federungselemente und sorgen für ein angenehmes Fahrgefühl bei einer Federung, die je nach Straßenverhältnissen zwischen einem "weichen" und "harten" Federungsverhalten angepasst werden kann. Dies geschieht in der Regel durch steuerbare Ventile, wodurch die durch dissipative Strömungen zwischen den einzelnen Arbeitsräumen entstehende Dämpfung beeinflusst bzw. verändert wird.

Es verbleibt jedoch bisher gelegentlich ein dem Fachmann bekanntes so genanntes "Harshness-Problem", d.h. ein überlagertes, etwas raues, hartes Federungsverhalten bei Schwingungen höherer Frequenz und geringer Amplitude, das durch die Abhängigkeiten von den für Luftfeder- und Dämpfereinheiten gebräuchlichen Bauweisen, Materialien, Eigendämpfungen, Trägheiten etc. entsteht.

Bei Luftfeder- und Dämpfereinheiten ist diese überlagerte Rauhigkeit (Harshness) u.a. abhängig vom anliegenden Arbeitsdruck, mit denen die Rollbälge und die übrigen Materialien beaufschlagt werden. Bei hohem Druck verhält sich nämlich zum einen die Luft als Dämpfungsmedium eher wie ein Fluid und wird daher selbst empfindlich im Hinblick auf die Dämpfungsfähigkeit in den genannten Bereichen, zum anderen führt der auf die Rollbälge wirkende Druck auch hier zur Verhärtung des Materials und zur Veränderung der inneren Federung / Dämpfung, so dass das Federungsverhalten in den Harshness-Bereichen unangenehmer wird.

Die DE 103 11 263 B3 2004.07.29 zeigt eine Luftfeder mit Luftdämpfung, wobei zwei Arbeitskammern und drei Rollbälge vorgesehen sind. Der im Durchmesser größte Rollbalg bestimmt hierbei die Federrate der Luftfeder über den Federweg und ist angeordnet zwischen einem oberen und einem unteren topfförmigen Gehäuseteil. Die beiden weiteren und sich in ihrer wirksamen Federkraft kompensierenden Bälge sind zwischen dem unteren topfförmigen Gehäuseteil und einem Abrollrohr angeordnet, welches innerhalb des oberen topfförmigen Gehäuseteil befestigt ist und in den unteren topfförmigen Gehäuseteil hineinragt. Über Drosselbohrungen in den zylindrischen Wänden des Abrollrohres kann Luft zwischen beiden Arbeitsräumen strömen. Die beiden unteren spiegelbildlich angeordneten Bälge erlauben in dieser Ausbildung eine axiale Führung der Luftfeder, wodurch die Reibung während des Federhubes weitgehend reduziert wird. Bei diesem System wird jedoch beim Einfedern das Volumen beider Arbeitskammern verkleinert und beim Ausfedern wieder vergrößert. Durch das Verkleinern beider Volumina beim Einfedern steigt der Druck und damit die Gasdichte in beiden Arbeitskammern an, nicht aber der dynamischen Differenzdrucks an den Drosselventilen. Dies wiederum bewirkt nachteiligerweise einen auch bei höherem Druck nur geringfügig gesteigerte Dämpfungsarbeit, was das Harshness-Problem eher verstärkt.

Die DE 3436664 A1 offenbart eine Membran-Luftfeder, welche ebenfalls Federung und Dämpfung bereitstellt und zwei unterschiedlich große Arbeitskammern aufweist, die jeweils teilweise durch Rollbälge nach außen begrenzt sind. Die Rollbälge stützen sich und rollen dabei auf äußeren Zylinderflächen axial beweglicher und als Hohlkolben ausgebildeter Gehäuseteile ab. Die unterschiedlich großen Arbeitskammern sind durch eine mit Drosselöffnungen versehene Wand getrennt, Durch die Drosselöffnungen kann Luft von einer Arbeitskammer in die andere strömen, wobei die entstehende Dissipation die Dämpfungsarbeit erzeugt. Die Membran-Luftfeder ist jedoch in ihrer Grundkonstruktion, bei der die als Hohlkolben ausgebildeten Gehäuseteile mit einer in der Trennwand geführten zentralen Stange verbunden sind, mit erheblichen Reibungsverlusten in dieser Führung behaftet. Hierdurch wird eine Mindestkraft erforderlich, die erreicht werden muß, um das Feder-Dämpfer-System überhaupt anspringen zu lassen. Schwingungen hoher Frequenzen unterhalb einer solchen Mindestkraft werden daher ungedämpft und ungefedert übertragen, so dass bei einer solchen Ausführung im Hinblick auf die "Harshness" eher unbefriedigende Ergebnisse zu erwarten sind.

Für die Erfindung bestand also die Aufgabe, eine Luftfeder- und Dämpfereinheit bereitzustellen die auch bei hohen Arbeitsdrücken Schwingungen höherer Frequenz und geringer Amplitude bedämpfen kann und das Harshness-Verhalten auf ein Minimum reduziert.

Gelöst wird diese Aufgabe durch die Merkmale des Hauptanspruchs. Weitere vorteilhafte Ausbildungen sind in den Unteransprüchen offenbart.

Dabei weist die Luftfeder- und Dämpfereinheit ein solcherart gegen den Umgebungsdruck abgedichtetes Gehäuse (4) aufweist, dass der rückseitige und dem jeweiligen Arbeitraum abgewandte Bereich der Rollfalte mit Druckmedium beaufschlagbar ist. Dies führt dazu, dass die Druckdifferenz zum durch den Rollbalg abgedichteten Arbeitsraum mindestens im Bereich der hoch beanspruchten Rollfalte verringert wird. Der Balg wird somit geringer belastet und innere Spannungen im Material reduziert. Dies führt dann direkt zu einer Harshness-Reduktion und damit zu einer deutlichen Komfortverbesserung.

Eine vorteilhafte Weiterbildung besteht darin, dass beide Arbeitsräume innerhalb eines gemeinsamen topfförmigen rotationssymmetrischen Gehäuses übereinander angeordnet und durch einen innerhalb des rotationssymmetrischen Gehäuses axial beweglichen und am Kopfende einer Kolbenstange befindlichen rotationssymmetrischen Kolben getrennt sind, wobei - jeweils abdichtend - zwischen Kolben und rotationssymmetrischem Gehäuse ein zur Kolbenvorderseite geöffneter erster Rollbalg sowie ein zur Kolbenrückseite geöffneter zweiter Rollbalg angeordnet ist, und wobei der Bereich zwischen den Rollfalten der Rollbälge mit Druckmedium beaufschlagbar ist.

Bei einer solchen Ausbildung sind also ein Arbeitsraum auf der Kolbenvorderseite und mindestens ein weiterer Arbeitsraum auf der Kolbenrückseite angeordnet, deren Rollfalten sich spiegelbildlich gegenüberliegen. Der weitere Arbeitsraum umgibt dann die Kolbenstange über eine Teillänge.

Eine solche Luftfeder- und Dämpfereinheit weist auch bei hohen Belastungen eine geringe Baugröße auf und vermeidet durch das Abtrennen und Dichten des Kolbens und der Kolbenstange jeweils durch Rollbälge innerhalb des rotationssymmetrischen Gehäuses jede merkbare Reibung und sorgt für ein sofortiges und komfortables "Anspringen" ohne Neigung zum Harshness-Verhalten.

Eine weitere vorteilhafte Weiterbildung besteht darin, dass zwischen Kolbenstange und rotationssymmetrischem Gehäuse ein vom Kolben beabstandeter dritter zur Kolbenrückseite geöffneter Rollbalg angeordnet ist. Der Kolben und die Kolbenstange werden dabei jeweils durch Rollbälge innerhalb des Gehäuses abgedichtet und geführt.

Ein Ausbildung mit drei auf solche Art angeordneten Bälgen erlaubt trotz der zur Reduzierung des "Harshness-Verhalten" erfolgenden Druckbeaufschlagung des Raumes zwischen den Rollfalten und der damit induzierten "weichen" Kennung der Rollfalten eine präzise und sichere Führung des Kolbens und der Kolbenstange, also des z.B. mit dem Fahrwerk verbundenen Teils der Luftfeder- und Dämpfereinheit innerhalb des topfförmigen zylindrischen Gehäuses, was dann mit der Karosserie verbunden ist. Hierdurch lassen sich auch auf die Luftfeder- und Dämpfereinheit einwirkende Querkräfte, d.h. Fahrwerkskräfte normal zur Achse der Luftfeder- und Dämpfereinheit übertragen. , was mit üblichen Luftfeder-Dämpfungssystemen nur bedingt möglich ist.

Dabei sind die Außenfläche des Kolbens und der Kolbenstange und die Innenfläche des Gehäuses jeweils mindestens teilweise als rotationssymmetrische Abrollkonturen ausgebildet.

Eine weitere vorteilhafte Weiterbildung besteht darin, dass das topfförmige rotationssymmetrische Gehäuse vorzugsweise im oberen Bereich karosseriefest und die Kolbenstange im unteren Bereich an einer Radaufhängung befestigbar sind. Hierdurch liegt insbesondere bei der Verwendung in Fahrwerken von Personenkraftwagen die Luftfeder- und Dämpfereinheit geschützt im Radhaus und paßt in der Vielzahl der Einbaufälle hervorragend in den vorgesehenen Bauraum (Package).

Eine weitere Möglichkeit besteht darin, dass die durchströmbaren Drosselventile als schalt- oder steuerbare Ventile ausgebildet und innerhalb des die Arbeitsräume trennenden rotationssymmetrischen Kolbens angeordnet sind, wobei der Bereich zwischen den Rollfalten der Rollbälge über schaltbare Kanäle in den durchströmbaren Drosselventilen mit Druckmedium beaufschlagbar ist. Insbesondere bei der Anwendung in Fahrwerken von Kraftwagen, bei denen es wünschenswert ist, die Dämpfungsarbeit zu steuern bzw. zu regeln, ergibt sich durch eine solche Ausbildung ein einfacher Weg, die Harshness-Kontrolle ebenfalls in die gesamte Fahrzeugsteuerung mit einzubinden. Bei der Ausführung gemäß Anspruch 2 sind hier auch konstruktive Vorteile zu erreichen, da keine separate Luftzufuhr von außen erforderlich wird.

Anhand eines Ausführungsbeispieles soll die Erfindung näher erläutert werden.

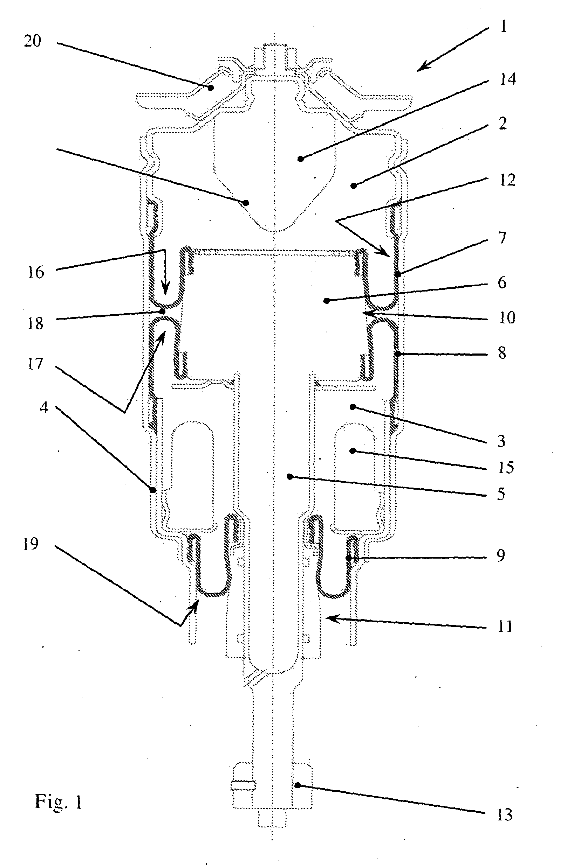

Die Fig. 1 zeigt hierzu eine erfindungsgemäße Luftfeder- und Dämpfereinheit 1 für ein Fahrwerk eines luftgefederten Personenkraftwagens in einer Ausführung nach Anspruch 2. Die Luftfeder- und Dämpfereinheit weist zwei mit Druckluft gefüllte Arbeitsräume 2 und 3 auf. Die Druckluft wird über einen hier nicht näher dargestellten Kompressor, über zugehörige Ventile und Leitungen in bekannter Weise in die Arbeitsräume gefördert und kann ebenfalls über dieses System abgelassen werden. Üblicherweise besteht ein Luftfeder- oder Niveauregelsystem aus Druckluftanlage / Druckluftversorgung und vier Luftfedermodulen, nämlich für jedes Rad eines, und wird insgesamt über eine Steuerungseinrichtung geregelt.

Die Arbeitsräume 2 und 3 sind in einem gemeinsamen topfförmigen, hier zylindrische ausgebildeten Gehäuse 4 angeordnet und durch einen am Kopfende einer Kolbenstange 5 befindlichen, rotationssymmetrisch ausgebildeten Kolben 6 getrennt. Der Kolben 6 ist innerhalb des zylindrischen Gehäuses 4 axial beweglich. Innerhalb des Kolbens 6 sind hier nicht näher dargestellte steuerbare Drosselventile angeordnet, über die beiden Arbeitsräume 2 und 3 verbunden sind. Der Kolben 6 und die Kolbenstange 5 werden jeweils durch Rollbälge 7, 8 und 9 innerhalb des zylindrischen Gehäuses abgedichtet und geführt. Die Außenflächen 10 und 11 des Kolbens und der Kolbenstange sowie die Innenfläche 12 des Zylinders sind jeweils über einen für das Abrollen der Rollbälge erforderlichen Bereich als rotationssymmetrische Abrollkonturen ausgebildet.

Ein zwischen dem Ende des zylindrischen Gehäuses und dem unteren Anschlußpunkt 13 zum Fahrwerk befindlicher Faltenbalg zum Schutz gegen Umgebungsbedingungen ist hier nicht näher dargestellt.

Die Luftfeder- und Dämpfereinheit weist weiterhin federnd ausgebildete Anschläge 14 und 15 auf, die bei entsprechender Belastung in der Druck- oder in der Zugstufenendlage den Kolbenweg / Federweg begrenzen, damit kein metallischer Kontakt entsteht.

Der zwischen den Rollfalten 16 und 17 der Rollbälge 7 und 8 befindliche ringförmige Bereich 18 wird über hier nicht näher dargestellte Kanäle mit Druckmedium beaufschlagt. Dies führt dazu, dass die Druckdifferenz zu den durch die Rollbälge 7 und 8 abgedichteten Arbeitsräumen 2 und 3 im Bereich der hoch beanspruchten Rollfalten 16 und 17 verringert wird. Dies führt dann zu einer deutlichen Komfortverbesserung durch Harshness-Reduktion, wobei trotzdem die Führungseigenschaften im Hinblick auf Querkräfte durch den dritten Rollbalg 9 und der dortige Rollfalte 19 erhalten bleiben.

Karosserieseitig ist die Luftfeder- und Dämpfereinheit über ein Federbein-Kopflager 20 mit dem Fahrzeug in bekannter Weise verbunden.

### Bezugszeichenliste

### (Teil der Beschreibung)

- 1: Luftfeder- und Dämpfereinheit
- 2: Arbeitsraum (Dämpferraum)
- 3: Arbeitsraum (Federraum)
- 4: Zylindrisches Gehäuse
- 5: Kolbenstange
- 6: Kolben
- 7 - 9: Rollbalg
- 10 - 12: Fläche mit Abrollkontur
- 13: Anschlußpunkt
- 14: Federnder Anschlag
- 15: Federnder Anschlag
- 16: Rollfalte
- 17: Rollfalte
- 18: ringförmiger Bereich
- 19: Rollfalte
- 20: Federbein-Kopflager

## Patentansprüche

1. Luftfeder- und Dämpfereinheit für Fahrzeuge, welche mindestens zwei mit Druckluft gefüllte Arbeitsräume aufweist, die jeweils mindestens teilweise durch bewegliche Wände in Form von Rollbälgen begrenzt werden, bei welcher die Rollbälge unter Bildung einer Rollfalte mindestens teilweise auf den Konturen rotationssymmetrischer Körper abrollen und bei welcher die Arbeitsräume untereinander über durchströmbare Drosselventile verbunden sind, **dadurch gekennzeichnet, dass** die Luftfeder- und Dämpfereinheit ein solcherart gegen den Umgebungsdruck abgedichtetes Gehäuse (4) aufweist, dass der rückseitige und dem jeweiligen Arbeitsraum (2, 3) abgewandte Bereich (18) der Rollfalte (16, 17) mit Druckmedium beaufschlagbar ist.

2. Luftfeder- und Dämpfereinheit nach Anspruch 1, **dadurch gekennzeichnet, dass** beide Arbeitsräume (2, 3) innerhalb eines gemeinsamen topfförmigen rotationssymmetrischen Gehäuses (4) übereinander angeordnet und durch einen innerhalb des rotationssymmetrischen Gehäuses (4) axial beweglichen und am Kopfende einer Kolbenstange (5) befindlichen rotationssymmetrischen Kolben (6) getrennt sind, wobei zwischen Kolben (6) und rotationssymmetrischem Gehäuse (4) ein zur Kolbenvorderseite geöffneter erster Rollbalg (7) sowie ein zur Kolbenrückseite geöffneter zweiter Rollbalg (8) angeordnet sind, und wobei der Bereich (18) zwischen den Rollfalten (16, 17) der Rollbälge (7, 8) mit Druckmedium beaufschlagbar ist.

3. Luftfeder- und Dämpfereinheit nach Anspruch 2, **dadurch gekennzeichnet, dass** zwischen Kolbenstange (5) und rotationssymmetrischem Gehäuse (4) ein vom Kolben (6) beabstandeter dritter zur Kolbenrückseite geöffneter Rollbalg (9) angeordnet ist.

4. Luftfeder- und Dämpfereinheit nach Anspruch 2 oder 3, **dadurch gekennzeichnet, dass** das topfförmige rotationssymmetrische Gehäuse (4) vorzugsweise im oberen Bereich karosseriefest und die Kolbenstange (5) im unteren Bereich an einer Radaufhängung befestigbar sind.

## Claims

1. Air spring and damper unit for vehicles, which has at least two compressed-air-filled working chambers which are each delimited at least partially by movable walls in the form of rolling bellows, in which air spring and damper unit the rolling bellows roll, so as to form a roll fold, at least partially on the contours of rotationally symmetrical bodies, and in which air spring and damper unit the working chambers are connected to one another by means of throttle valves which can be traversed by flow, **characterized in that** the air spring and damper unit has a housing (4) which is sealed off from ambient pressure in such a way that the rear-side region (18), which faces away from the respective working chamber (2, 3), of the roll fold (16, 17) can be acted on with pressure medium.

2. Air spring and damper unit according to Claim 1, **characterized in that** the two working chambers (2, 3) are arranged one above the other within a common pot-shaped rotationally symmetrical housing (4) and are separated by means of a rotationally symmetrical piston (6) which is axially movable within the rotationally symmetrical housing (4) and which is situated on the head end of a piston rod (5), with a first rolling bellows (7), which is open toward the piston front side, and a second rolling bellows (8), which is open toward the piston rear side, being arranged between the piston (6) and the rotationally symmetrical housing (4), and with it being possible for the region (18) between the roll folds (16, 17) of the rolling bellows (7, 8) to be acted on with pressure medium.

3. Air spring and damper unit according to Claim 2, **characterized in that** a third rolling bellows (9), which is spaced apart from the piston (6) and is open toward the piston rear side, is arranged between the piston rod (5) and the rotationally symmetrical housing (4).

4. Air spring and damper unit according to Claim 2 or 3, **characterized in that** the pot-shaped, rotationally symmetrical housing (4) can be fastened, preferably in the upper region, so as to be fixed with respect to the body, and the piston rod (5) can be fastened, in the lower region, to a wheel suspension.

## Revendications

1. Unité de suspension et d'amortissement pneumatique pour véhicules, qui présente au moins deux chambres de travail remplies d'air sous pression et délimitées chacune au moins en partie par des parois mobiles qui présentent la forme de soufflets déroulants, les soufflets déroulants se déroulant au moins en partie sur le contour de corps à symétrie de rotation pour former un repli déroulant, les chambres de travail étant reliées l'une à l'autre par des soupapes d'étranglement traversées par l'air,
**caractérisée en ce que**
l'unité de suspension et d'amortissement pneumatique présente un boîtier (4) séparé hermétiquement de la pression ambiante de telle sorte que la partie (18) arrière des plis déroulants (16, 17) qui n'est pas tournée vers la chambre de travail (2, 3) concernée peut être alimentée en fluide sous pression.

2. Unité de suspension et d'amortissement pneumatique selon la revendication 1, **caractérisée en ce que** les deux chambres de travail (2, 3) sont disposées l'une au-dessus de l'autre dans un boîtier commun (4) en forme de chapeau et à symétrie de rotation et sont séparées par un piston (6) à symétrie de rotation, mobile axialement à l'intérieur du boîtier (4) à symétrie de rotation et situé à l'extrémité de tête d'une tige de piston (5), un premier soufflet déroulant (7) ouvert par rapport au côté avant du piston ainsi qu'un deuxième soufflet déroulant (8) ouvert par rapport au côté arrière du piston étant disposés entre le piston (6) et le boîtier (4) à symétrie de rotation, la partie (18) située entre les plis déroulants (16, 17) des soufflets déroulants (7, 8) pouvant être alimentée en fluide sous pression.

3. Unité de suspension et d'amortissement pneumatique selon la revendication 2, **caractérisée en ce qu'**un troisième soufflet déroulant (9) situé à distance du piston (6) et ouvert par rapport au côté arrière du piston est disposé entre la tige de piston (5) et le boîtier (4) à symétrie de rotation.

4. Unité de suspension et d'amortissement pneumatique selon les revendications 2 ou 3, **caractérisée en ce que** le boîtier (4) en forme de chapeau à symétrie de rotation peut être fixé sur la carrosserie de préférence par sa partie supérieure et **en ce que** la tige de piston (5) peut être fixée par sa partie inférieure à une suspension de roue.
